# FASCICULE DE BREVET EUROPEEN

(11) **EP 1 203 523 B1**
(45) Date de publication et mention de la délivrance du brevet: **04.04.2007**
(21) Numéro de dépôt: 01402844.3
(22) Date de dépôt: 05.11.2001
(51) Int. Cl.: A01B 49/06

(54) **Engin de labour multifonction pour effectuer les semailles**
Mehrzwecksäpfluggerät
Multi-functional plough implement for seeding

(30) Priorité: 06.11.2000 FR 0014172
(43) Date de publication de la demande: 08.05.2002
(73) Titulaire: Javerlhac, Jean-Charles, 16300 Guimps (FR)
(72) Inventeur: Javerlhac, Jean-Charles, 16300 Guimps (FR)
(74) Mandataire: Leszczynski, André

(56) Documents cités:
- EP-A- 0 481 538
- EP-A- 0 640 276
- FR-A- 798 565
- FR-A- 2 687 276
- US-A- 1 762 844

## Description

La présente invention a pour objet un engin de labour multifonction qui peut être utilisé pour effectuer les semailles ou une simple préparation du sol tel qu'un hersage ou un rappui (voir p. ex. EP-A-640276).

On sait que, le plus souvent, les semailles des graines telles que les céréales sont réalisées sur un terrain préalablement travaillé, à l'aide de semoirs qui déposent les graines sur une série de lignes parallèles, ou qui les distribuent en les répartissant sur le sol. Ces graines étant ensuite enfouies par un outil qui peut être de diverses natures. De telles semailles sont généralement connues sous les expressions "en lignes" et "à la volée".

La présente invention a pour objet d'associer dans des conditions particulières un semoir et un engin de labour comportant au moins un train de disques en forme de calottes sphériques, ledit train de disques pouvant être également utilisé comme engin de labour traditionnel lorsqu'il ne participe pas aux semailles ou simplement pour la préparation du sol pour un hersage ou un rappui.

La présente invention a pour objet un engin de labour multifonction, telle qu'elle est caractérisée dans les revendications.

Dans un mode de réalisation particulier de l'invention, l'engin comporte pour ameublir le sol en amont du train de disques qui enfouit les graines, un ou deux trains de disques parallèles qui travaillent à la manière conventionnelle en présentant leurs concavités dans la direction de l'avancement de l'engin.

Dans un autre mode réalisation, le sol peut être ameubli au devant du train de disques selon l'invention par d'autres moyens tels que des socs, des griffes ou autres scarificateurs.

Selon l'invention les graines peuvent être déposées sur le sol par tout dispositif de semailles approprié à la nature des graines.

C'est ainsi que pour du blé les graines peuvent être semées à la volée à l'avant ou à l'arrière du dispositif qui ameublit le sol.

Grâce à l'invention, l'action de la partie inférieure convexe des disques a pour effet de repousser progressivement les graines sur le côté de leur convexité pour les placer sensiblement selon des lignes parallèles, tout en tassant légèrement le sol pour les enfouir.

Selon un autre mode de réalisation de l'invention, on peut utiliser un semoir traditionnel en ligne qui dépose les graines entre les disques du train de disques selon l'invention et à l'avant de ceux-ci, ce qui assure une bonne mise en place des graines même à faible profondeur.

On peut ainsi selon l'invention modifier la profondeur à laquelle les graines sont déposées dans le sol, en faisant varier la distance entre l'axe des disques et le point où les graines sont déposées sur le sol.

Selon un mode de réalisation particulier de l'invention, le train de disques situé à l'arrière de l'engin peut être basculé autour d'un axe vertical, soit dans une position où les disques présentent leurs faces convexes dans la direction du déplacement de l'engin qui peut alors fonctionner notamment comme semoir conformément à l'invention ou pour effectuer un préparation du sol tel qu'un hersage ou un rappui, soit, dans une position où les disques présentent leur face concave en direction de l'avancement de l'engin, ce qui leur permet d'effectuer un labour traditionnel.

Dans ce mode de réalisation particulier de l'invention, il est avantageux de disposer des paires de trains de disques identiques, symétriquement, de part et d'autre de l'axe central de l'engin de labour, ce qui permet de compenser les forces latérales qui auraient tendance à déporter latéralement l'engin s'il ne comportait que des trains de disques inclinés dans la même direction.

Selon l'invention on peut aussi disposer si on le désire d'un engin comportant un ou plusieurs trains de disques parallèles qui peuvent dans un sens de marche être utilisés comme engin de labour et qui en sens inverse peuvent être utilisés comme semoir pour enfouir des graines déposées à la volée ou en lignes.

Conformément à l'invention, le contour des disques convexes peut être quelconque. C'est ainsi que l'on peut utiliser, conformément à l'invention, des disques lobés, c'est-à-dire des disques dont le périmètre est défini par une succession d'arcs de cercle convexes, des disques qui présentent sur leur périphérie une série d'entailles en arcs de cercle concaves, des disques convexes dont les bords présentent des nervures ou ondulations qui assurent un ameublissement du sol supplémentaire, ou encore des disques dont la périphérie est circulaire.

Les trains de disques convexes selon l'invention, peuvent être montés sur un axe commun en étant alors coaxiaux. Ils peuvent également être chacun supportés par un bras qui permet de régler à la fois l'inclinaison de chaque disque par rapport à la verticale et par rapport à la direction d'avancement. Tous les bras sont dans ce cas solidaires d'une même poutre pour constituer le train.

Dans le but de mieux faire comprendre l'invention on va en décrire maintenant à titre d'illustration et sans aucun caractère limitatif, plusieurs modes de réalisation donnés à titre d'exemples.
- la figure 1 est une vue schématique de dessus d'un engin selon l'invention,
- la figure 2 est un mode de réalisation particulier de l'engin selon l'invention dans lequel la terre est ameublie en amont du semoir par un train de disques travaillant de manière conventionnelle,
- la figure 3 est un mode de réalisation de l'invention comportant des trains de disques disposés symétriquement de part et d'autre de l'axe de l'engin, les trains de disques arrières pouvant être basculés de manière à présenter dans la direction d'avancement, soit la face convexe des disques pour utiliser l'engin en semoir, soit leur face concave pour utiliser le train de disques de manière traditionnelle comme engin de labour,
- les figures 4, 5 et 6 représentent des exemples de formes de disques qui peuvent être utilisées conformément à l'invention,
- et la figure 7 représente un mode de réalisation selon lequel chaque disque selon l'invention est assujetti de manière réglable sur une poutre.

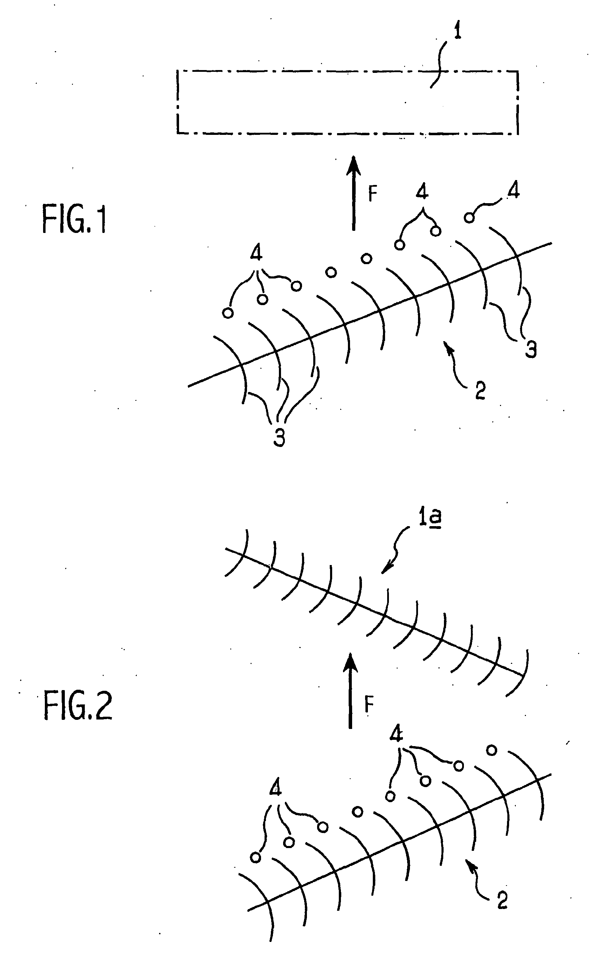

On a représenté schématiquement sur la figure 1 un engin 1 qui permet d'ameublir le sol. Cet engin peut être constitué par exemple par des charrues traditionnelles, un ensemble de griffes, ou un ou plusieurs trains de disques de labour.

Cet ameublissement du sol peut être réalisé soit antérieurement au passage de l'engin selon l'invention, soit avec un engin qui est physiquement relié à l'engin selon l'invention.

Dans ce dernier cas, un train de disques 2 est disposé à l'arrière de l'engin 1 qui se déplace dans le sens de la flèche F.

Conformément à l'invention, le train de disques 2 comporte des disques 3 dont la face convexe est dirigée dans la direction F d'avancement de l'engin.

Conformément au mode de réalisation de la figure 1, on dispose à l'avant du train de disques 2 un semoir qui dépose les graines en 4 pour réaliser une semaille en lignes.

Selon l'invention, les graines sont avantageusement déposées vers le milieu de la distance qui sépare les extrémités avant de deux disques voisins.

Dans une variante, les graines peuvent être semées à la volée devant le train de disques 2 selon l'invention.

Selon l'invention, les disques convexes ne travaillent que sur une profondeur suffisante pour enfouir convenablement les graines.

Grâce à la convexité des disques, les graines sont ainsi progressivement enfouies et tassées dans le sol en étant repoussées par la partie inférieure bombée des disques.

Il en résulte que même si les graines ont été semées à la volée, l'engin selon l'invention tend à les replacer selon des lignes grâce à l'action de la portée inférieure des disques convexes.

La figure 2 représente schématiquement un engin selon l'invention dans lequel on a placé pour ameublir le sol un train de disques conventionnel 1a en avant du train de disques 2 selon l'invention qui est associé à un semoir en lignes 4.

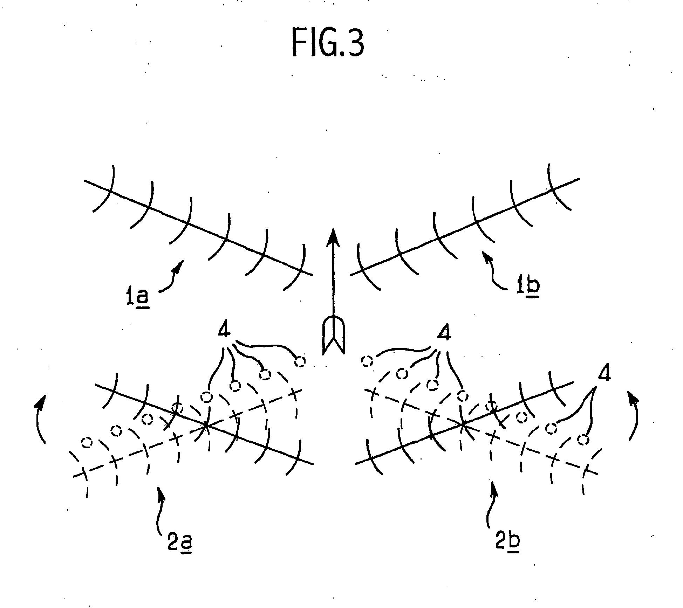

On a représenté sur la figure 3 comment il est avantageux de réaliser un engin selon l'invention, en disposant à l'avant de celui-ci, symétriquement par rapport à l'axe de l'engin, deux trains de disques 1a et 1b qui présentent la concavité des disques en direction de l'avancement, et à l'arrière deux trains de disques 2a et 2b qui sont susceptibles de pivoter autour d'un axe vertical entre une première position représentée en trait plein dans lesquels les trains de disques 2a et 2b présentent la concavité des disques dans le sens de l'avancement de l'engin, qui a pour effet de jouer le rôle d'un engin de labour habituel, et une deuxième position représentée sur la figure 3 en trait interrompu, dans laquelle les trains de disques 2a et 2b présentent leur convexité en direction de l'avancement de l'engin, ce qui permet de les associer à un semoir en ligne 4 qui est représenté en ligne interrompue sur la figure 3 mais qui pourrait être un semoir à la volée.

Cette disposition symétrique de l'engin de la figure 3 permet d'équilibrer les forces latérales exercées par les trains de disques lorsque ces derniers ont leurs axes parallèles.

Par contre, dans le mode de réalisation de la figure 2, le fait que le train de disques de labour 1a et le train de disques 2 qui participent aux semailles s'équilibrent sensiblement compte tenu du fait que leurs inclinaisons sont opposées.

Différentes formes de disques peuvent être utilisées.

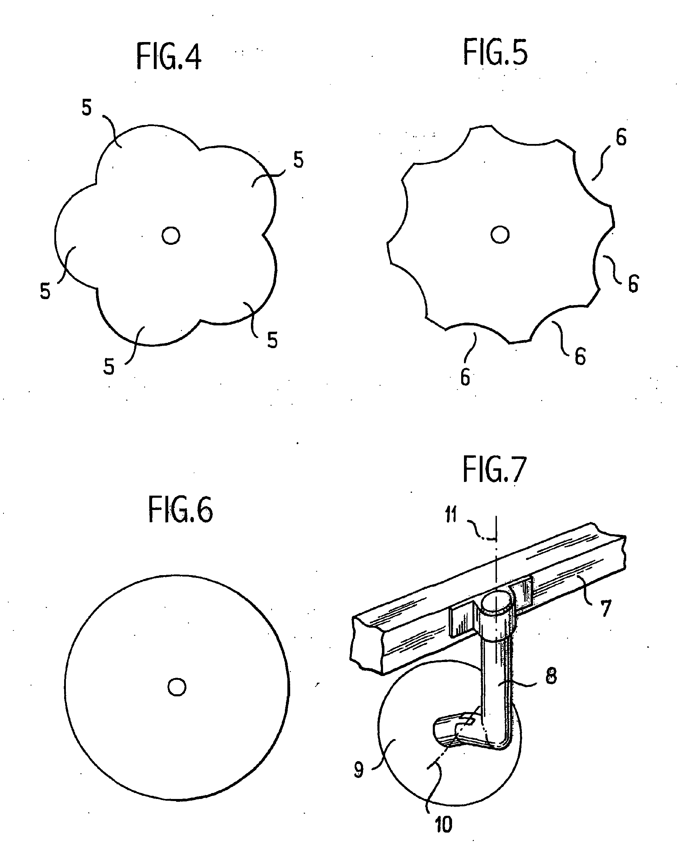

La figure 4 représente un disque multilobé connu qui, en plus de sa forme de calotte sphérique présente sur sa périphérie une série de lobes 5.

La figure 5 représente un disque connu dont les bords sont découpés par des évidements 6 de forme arrondie.

Enfin, la figure 6 représente un disque connu dont la périphérie est circulaire, ce disque ayant essentiellement une forme de calotte sphérique.

On a représenté sur la figure 7 un mode de réalisation dans lequel chaque disque 9 est fixé sur une poutre 7 à l'aide d'un bras articulé 8 qui peut être maintenu dans diverses positions angulaires autour des axes 10 et 11.

On peut ainsi orienter les disques dans une position optimale en fonction des semailles à effectuer.

De même les disques peuvent être munis sur leurs périphéries de nervures ou d'ondulations qui assurent un ameublissement du sol supplémentaire.

On peut selon l'invention utiliser divers types de disques tels que des disques gaufrés et des disques fléaux.

Il est clair que les modes de réalisation qui ont été décrits ci-dessus ne présentent aucun caractère limitatif et qu'ils pourront recevoir toutes modifications désirables sans sortir pour cela du cadre de l'invention telle que revendiquée.

## Revendications

1. Engin de labour multifonction, **caractérisé par le fait qu**'il comporte au moins un train de disques (2) en forme de calotte sphérique, la face convexe de chacun des disques (3) étant dirigée dans la direction (F) de déplacement de l'engin, ledit engin étant associé à un semoir qui dépose les graines, les disques (3) agissant sur le sol par les extrémités inférieures de leurs faces convexes en repoussant progressivement les graines sur le côté de leur convexité tout en tassant légèrement le sol pour les enfouir.

2. Engin selon la revendication 1, **caractérisé par le fait qu'**il comporte en amont un dispositif (1) pour ameublir le sol.

3. Engin selon la revendication 2, **caractérisé par le fait que** l'engin pour ameublir le sol est constitué par un ou plusieurs trains de disques (3) parallèles qui présentent leurs concavités dans la direction (F) de l'avancement de l'engin.

4. Engin selon l'une quelconque des revendications précédentes, **caractérisé par le fait qu**'il est associé à un semoir à la volée qui dépose les graines sur le sol en amont du train de disques (3) dont les faces convexes sont dirigées vers l'avant.

5. Engin selon l'une quelconque des revendications 1 à 3, **caractérisé par le fait qu'**il est associé à un semoir en ligne (4) qui dépose les graines entre les disques (3) convexes du train de disques (2).

6. Engin selon l'une quelconque des revendications 1 à 5, **caractérisé par le fait que** le train de disques (2) peut être basculé autour d'un axe vertical, soit dans une position où les disques (3) présentent leurs faces convexes en direction (F) du déplacement de l'engin qui fonctionne notamment comme semoir, soit dans une position où les disques (3) présentent leurs faces concaves en direction (F) du déplacement de l'engin, pour effectuer un labour traditionnel.

7. Engin selon la revendication 6, **caractérisé par le fait qu**'il comporte deux trains de disques (2a, 2b) disposés symétriquement par rapport à l'axe de l'engin, qui sont basculés simultanément et qui permettent d'équilibrer les forces latérales qui s'exercent sur l'engin.

8. Engin selon l'une quelconque des revendications précédentes, **caractérisé par le fait que** chaque disque (3) d'un même train (2) est monté sur un bras orientable (8) supporté par une poutre commune (7) qui permet de positionner le disque autour d'un axe vertical (11) et d'un axe horizontal (10).

## Claims

1. A multifunction tilling implement, **characterized by** the fact that it comprises at least one set (2) of disks in the form of spherical caps, the convex face of each disk (3) being directed in the travel direction (F) of the implement, said implement being associated with a sowing device that places seeds, the disks (3) acting on the ground via the bottom ends of their convex faces by progressively pushing back the seeds against their convex sides while lightly tamping the ground to bury them.

2. An implement according to claim 1, **characterized by** the fact that it includes an upstream device (1) for breaking up the ground.

3. An implement according to claim 2, **characterized by** the fact that the implement for breaking up the ground is constituted by one or more parallel sets of disks (3) having their concave sides facing in the forward advance direction (F) of the implement.

4. An implement according to any preceding claim, **characterized by** the fact that it is associated with a seed broadcaster which places the seeds on the ground upstream from the set of disks (3) whose convex faces are directed forwards.

5. An implement according to any one of claims 1 to 3, **characterized by** the fact that it is associated with a seed drill (4) which places seeds between the convex disks (3) of the set (2) of disks.

6. An implement according to any one of claims 1 to 5, **characterized by** the fact that the set (2) of disks can be turned about a vertical axis, either into a position in which the disks (3) present their convex faces in the travel direction (F) of the implement which acts in particular as a sowing device, or else in a position in which the disks (3) present their concave faces in the travel direction (F) of the implement, in order to perform traditional tilling.

7. An implement according to claim 6, **characterized by** the fact that it has two sets (2a, 2b) of disks disposed symmetrically about the axis of the implement, which sets are turned simultaneously and enable the lateral forces that act on the implement to be balanced.

8. An implement according to any preceding claim, **characterized by** the fact that each disk (3) of a given set (2) is mounted on a swivel arm (8) supported by a common beam (7) serving to position the disk about a vertical axis (11) and a horizontal axis (10).

## Patentansprüche

1. Mehrfunktionales Arbeitsgerät, **dadurch gekennzeichnet, daß** es wenigstens einen Satz (2) von im wesentlichen kugelkalottenförmigen Scheiben (3) aufweist, deren konvexe Seite in die Fortbewegungsrichtung (F) des Gerätes weist, wobei das Gerät mit einer Sämaschine zum Ablegen von Saatkörnern verbunden ist und die Scheiben mit den unteren Enden ihrer konvexen Seiten auf den Boden einwirken, indem sie die Saatkörner fortschreitend auf der Seite ihrer Konvexität verdrängen und sich dabei leicht in den Boden einsenken, um die Saatkörner einzugraben.

2. Gerät nach Anspruch 1, **dadurch gekennzeichnet, daß** es stromaufwärts eine Einrichtung (1) zum Auflockern des Bodens aufweist.

3. Gerät nach Anspruch 2, **dadurch gekennzeichnet, daß** das Gerät zum Auflockern des Bodens durch einen oder mehrere Sätze von parallelen Scheiben (3) gebildet wird, deren Höhlungen in die Fortbewegungsrichtung (F) des Gerätes weisen.

4. Gerät nach einem der vorstehenden Ansprüche, **dadurch gekennzeichnet, daß** es mit einer Breitsämaschine verbunden ist, die die Saatkörner stromaufwärts des Satzes der Scheiben (3), deren konvexe Seiten nach vorn gerichtet sind, auf den Boden ablegt.

5. Gerät nach einem der Ansprüche 1 bis 3, **dadurch gekennzeichnet, daß** es mit einer Reihensämaschine (4) verbunden ist, die die Saatkörner zwischen den konvexen Scheiben (3) des Scheibensatzes (2) ablegt.

6. Gerät nach einem der Ansprüche 1 bis 5, **dadurch gekennzeichnet, daß** der Scheibensatz (2) um eine vertikale Achse schwenkbar ist, entweder in eine Position, in der die Scheiben (3) mit ihren konvexen Seiten in Fortbewegungsrichtung (F) des Gerätes weisen, das dann als Sämaschine arbeitet, oder in eine Position, in der die Scheiben (3) mit ihren konkaven Seiten in Fortbewegungsrichtung (F) des Gerätes weisen, um eine herkömmliche Bodenbearbeitung auszuführen.

7. Gerät nach Anspruch 6, **dadurch gekennzeichnet, daß** es zwei Scheibensätze (2a, 2b) aufweist, die symmetrisch in Bezug auf die Achse des Gerätes angeordnet sind und die gleichzeitig geschwenkt werden und es gestatten, die auf das Gerät ausgeübten seitlichen Kräfte auszugleichen.

8. Gerät nach einem der vorstehenden Ansprüche, **dadurch gekennzeichnet, daß** jede Scheibe (3) desselben Satzes (2) an einem verstellbaren Arm (8) montiert ist, der durch einen gemeinsamen Träger (7) gehalten ist, der es gestattet, die Scheibe um eine vertikale Achse (11) und eine horizontale Achse (10) zu verstellen.
